(19) **Europäisches Patentamt / European Patent Office / Office européen des brevets**

(11) **EP 3 971 599 B1**

(12) **FASCICULE DE BREVET EUROPEEN**

(45) Date de publication et mention
de la délivrance du brevet:
**16.04.2025 Bulletin 2025/16**

(21) Numéro de dépôt: **21197103.1**

(22) Date de dépôt: **16.09.2021**

(51) Classification Internationale des Brevets (IPC):
**G01S 3/04** (2006.01)   **G01S 3/46** (2006.01)
**G01S 3/74** (2006.01)   **H01Q 21/06** (2006.01)
**H04B 1/00** (2006.01)

(52) Classification Coopérative des Brevets (CPC):
**G01S 3/46; G01S 3/043; G01S 3/74; H01Q 21/06**

(54) **PROCÉDÉ DE DÉTECTION D'UN SIGNAL ÉLECTROMAGNÉTIQUE D'INTÉRÊT ET D'ESTIMATION DE SA DIRECTION D'ARRIVÉE DANS UN GONIOMÈTRE INTERFÉROMÉTRIQUE LARGE BANDE À RÉCEPTION NUMÉRIQUE SOUS-ÉCHANTILLONNÉE**

VERFAHREN ZUR ERFASSUNG EINES ELEKTROMAGNETISCHEN SIGNALS VON INTERESSE UND ZUR SCHÄTZUNG SEINER ANKUNFTSRICHTUNG IN EINEM INTERFEROMETRISCHEN BREITBAND-GONIOMETER MIT UNTERABGETASTETEM DIGITALEM EMPFANG

METHOD FOR DETECTING AN ELECTROMAGNETIC SIGNAL OF INTEREST AND FOR ESTIMATING ITS DIRECTION OF ARRIVAL IN A WIDE BAND INTERFEROMETRIC GONIOMETER WITH SUB-SAMPLED DIGITAL RECEPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2020 FR 2009413**

(43) Date de publication de la demande:
**23.03.2022 Bulletin 2022/12**

(73) Titulaire: **THALES**
**92400 Courbevoie (FR)**

(72) Inventeur: **LE MEUR, Anne**
**78851 ELANCOURT CEDEX (FR)**

(74) Mandataire: **Lavoix**
**2, place d'Estienne d'Orves**
**75441 Paris Cedex 09 (FR)**

(56) Documents cités:
**EP-A1- 3 671 250      FR-A1- 3 020 157**
**US-A1- 2018 083 816**

**EP 3 971 599 B1**

**Description**

La présente invention concerne un procédé d'estimation du signal et de la direction d'arrivée des signaux électromagnétiques dans un goniomètre interférométrique large bande à réception numérique sous-échantillonnée. La présente invention se rapporte également à un produit programme d'ordinateur, et au goniomètre interférométrique pour la mise en oeuvre de ce procédé d'estimation.

L'invention concerne le domaine général des systèmes d'écoute à très large bande instantanée, et, plus précisément, celui de la réception, dans une très large bande instantanée, de signaux électromagnétiques.

Dans ce domaine, on connaît les documents EP 3 671 250 A1, US 2018/083816 A1 et FR 3 020 157 A1.

Lorsqu'une précision angulaire sur la direction d'arrivée d'un signal électromagnétique incident est exigée, ces systèmes d'écoute sont des interféromètres, c'est-à-dire des goniomètres fondés sur la réception du signal par un ensemble d'antennes à diversité spatiale.

Dans le présent document, on appelle signal d'intérêt un signal provenant d'une source électromagnétique, par opposition à du bruit seul.

Dans ce domaine, un signal d'intérêt pouvant se trouver à des fréquences porteuses très variées, la bande de réception de l'interféromètre doit être très étendue.

Les signaux d'intérêt sont à bande étroite mais peuvent se trouver à des fréquences porteuses très variées, la bande de réception de l'interféromètre doit être très étendue.

Echantillonner cette bande de réception en respectant le critère de Nyquist-Shannon s'avère difficile car cela nécessiterait d'utiliser des composants de conversion analogiques - numériques ultra rapides. Or, soit de tels composants ne sont pas encore disponibles sur l'étendue de la bande de fréquence à traiter, soit, lorsqu'ils sont disponibles, de tels composants ne satisfont pas les contraintes de poids, volume et/ou consommation permettant leur intégration dans un système d'écoute embarqué.

De plus, si de tels composants existaient, ils génèreraient un flux de données qui serait incompatible non seulement avec les débits des bus de transfert de données, mais aussi avec les capacités de traitement des calculateurs usuellement mis en œuvre dans un module de traitement numérique.

Pour contourner cette difficulté, on utilise un interféromètre d'un genre nouveau effectuant plusieurs échantillonnages à des fréquences d'échantillonnage $fe_m$ ne respectant pas le critère de Nyquist-Shannon, c'est-à-dire très inférieures au double de largeur de la bande de réception pour des signaux réels.

Ce sous-échantillonnage a l'avantage de lever les contraintes sur la conversion analogique - numérique, mais, sur chaque voie de réception (chaque voie étant indicée par l'entier m entre 1 et M), il provoque le repliement de la bande de réception à traiter dans la bande [$-fe_m/2$, $fe_m/2$].

Les signaux reçus, réels et à bande étroite, sont caractérisés par le fait que leur spectre est composé de deux motifs à support respectivement dans $\mathcal{R}^+$ et dans $\mathcal{R}^-$, appelés respectivement motif de bande latérale supérieure et motif de bande latérale inférieure. Ces deux motifs possèdent une symétrie hermitienne l'un par rapport à l'autre. Après repliement, l'un des deux motifs se retrouve dans la première zone négative de Nyquist [$-fe_m/2,0$], et l'autre motif se retrouve dans la première zone positive de Nyquist[$0$, $fe_m/2$].

Une conséquence du repliement spectral est que les fréquences mesurées dans la bande repliée[$-fe_m/2$, $fe_m/2$] sont ambiguës. Cependant, un choix judicieux des valeurs des fréquences d'échantillonnage $fe_m$ d'une voie à l'autre permet de lever les ambiguïtés.

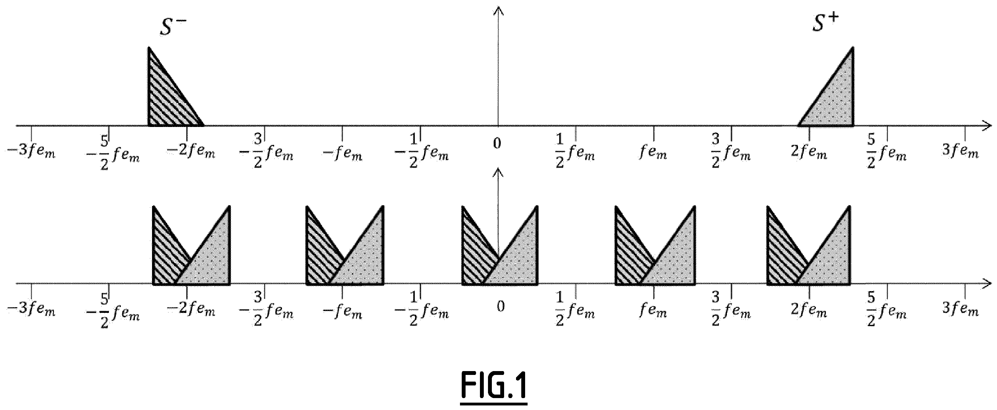

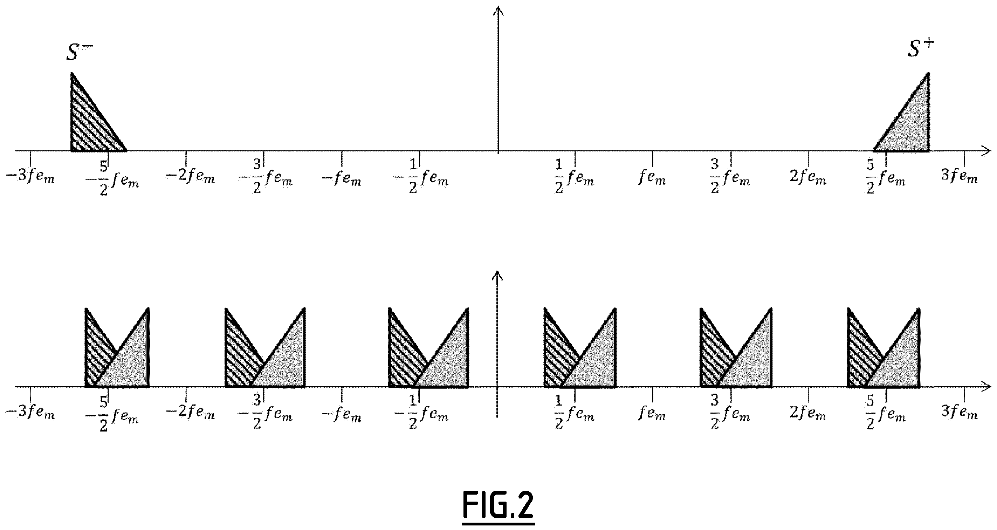

Une autre conséquence est que, pour un signal d'intérêt dont la fréquence porteuse est proche d'un multiple de la demi-fréquence d'échantillonnage $fe_m/2$ d'une des voies de réception, le motif de bande latérale supérieure $S^+$ (aussi dénommé premier signal dans la présente description) et le motif de bande latérale inférieure $S^-$ (aussi dénommé second signal dans la présente description) se replient l'un sur l'autre. Sur cette voie de réception, il y a donc mélange : le signal est parasité par lui-même. Cela est illustré dans les figures 1 et 2, respectivement dans le cas où la fréquence du signal est un multiple paire de la demi-fréquence d'échantillonnage $fe_m/2$ et dans le cas où la fréquence du signal est un multiple impair de la demi-fréquence d'échantillonnage $fe_m/2$.

Ce parasitage se produit sur une seule des voies de réception, car les fréquences d'échantillonnage sont choisies telles qu'une fréquence ne peut être simultanément multiple de deux demi-fréquences d'échantillonnages distinctes, c'est-à-dire tel que deux demi-fréquences d'échantillonnage distinctes ne peuvent avoir de multiple commun dans la bande de réception des fréquences à intercepter.

Il y a donc un besoin de pouvoir traiter la situation où les deux motifs de bandes latérales d'un signal réel d'intérêt interfèrent l'un avec l'autre en raison du repliement spectral. On supposera dans la suite que le signal d'intérêt à traiter n'est parasité par aucun autre signal d'intérêt.

Pour cela l'invention, selon la revendication indépendante 1, a pour objet un procédé de détection d'un signal électromagnétique d'intérêt et d'estimation de sa direction d'arrivée, ledit procédé étant mis en œuvre par un goniomètre interférométrique à large bande de réception et à réception numérique sous-échantillonnée, ledit goniomètre interférométrique comportant M voies de réception, M étant un entier supérieur ou égal à quatre, chaque voie de réception

2

comportant successivement une antenne, un module de réception analogique et un module de réception numérique, le module de réception numérique fonctionnant à une fréquence d'échantillonnage qui lui est propre et délivrant périodiquement une grille temps-fréquence fournie par une succession d'analyses spectrales, chaque case de la grille temps/fréquence contenant une mesure complexe, caractérisé en ce que, dans le cas où, sur une voie de réception, une fréquence porteuse du signal d'intérêt est située au voisinage d'un multiple de la moitié de la fréquence d'échantillonnage de ladite voie de réception, le motif de bande latérale supérieure et le motif de bande latérale inférieure du spectre du signal d'intérêt se mélangeant après repliement dans ladite voie de réception, dite voie de mélange, les autres voies de réception étant dites voies sans mélange, le procédé comporte les étapes consistant à : définir des domaines temps/fréquence en subdivisant l'espace temps/fréquence, chaque domaine temps/fréquence correspondant chacun au produit cartésien d'un intervalle temporel égal à la durée de quelques analyses spectrales successives, par un intervalle fréquentiel égal à quelques canaux d'analyse spectrale, chaque domaine étant replié sur une fenêtre dans la voie de réception $m$, une fenêtre comportant $L$ cases ; détecter la présence éventuelle d'un signal d'intérêt en comparant l'énergie contenue dans les fenêtres sans mélange à un seuil, et prélever, dans les M grilles temps/fréquence délivrées par chacune des voies de réception, les mesures des cases des fenêtres associées au domaine du motif de bande latérale supérieure en tant que premier signal et les mesures des cases de des fenêtres associées au domaine du motif de bande latérale inférieure en tant que second signal ; élaborer des vecteurs de mesure à partir des mesures prélevées de telle sorte que : les mesures du premier signal sur les voies sans mélange soient mises sous la forme de $L$ premiers vecteurs de mesures ; les mesures du second signal sur les voies sans mélanges soient mises sous la forme de $L$ seconds vecteurs de mesures ; et les mesures sur la voie mélangée correspondent à $L$ scalaires ; estimer d'une part les amplitudes complexes, à un coefficient de normalisation près, du premier signal et le vecteur directionnel réduit aux voies sans mélange et normalisé du premier signal, uniquement à partir des $L$ premiers vecteurs de mesure ; et d'autre part les amplitudes complexes, à un coefficient de normalisation près, du second signal et le vecteur directionnel réduit aux voies sans mélange et normalisé du second signal, uniquement à partir des $L$ seconds vecteurs de mesure ; calculer les phases interférométriques du premier signal sur la voie de mélange à partir des amplitudes complexes estimées à partir des mesures sur la voies de mélange ; calculer le module du vecteur directionnel réduit aux voies sans mélange, et l'amplitude de la composante du vecteur directionnel sur la voie de mélange, pour le premier signal; et, déterminer la direction d'arrivée du premier signal à partir des phases interférométriques ou à partir du vecteur directionnel estimé pour le premier signal, considéré comme le signal d'intérêt.

Suivant des modes particuliers de réalisation, le procédé comporte une ou plusieurs des caractéristiques suivantes, prises isolément ou suivant toutes les combinaisons techniquement possibles :

-    lequel les étapes d'estimation des premier et second signaux sur les voies sans mélange sont fondées sur les équations suivantes :

$$\begin{cases} CX_l = s_l U + W_{1l} \\ CZ_l = s_l' \overline{U} + W_{3l} \end{cases}$$

, l ∈ [1, L], où : $CX_l$ sont les premiers vecteurs de mesures ; $CZ_l$ sont les seconds vecteurs de mesures ; $s_l$ et $s_l'$ sont les amplitudes complexes du premier signal et du second signal respectivement ; U et $\overline{U}$ sont des vecteurs directionnels réduits aux voies non mélangées ; et $W_{1l}$, $W_{3l}$ sont des bruits gaussiens, centrés, indépendants en 1 et entre eux.

-    les vecteurs directionnels réduits aux voies non mélangées, U et $\overline{U}$, n'étant pas normés, un vecteur A normé et un réel positif $\mu$ sont introduits, tels que $U = \mu A$ et l'étape d'estimation consiste à : diagonaliser la matrice $\text{Cov}_1$ définie comme : $\text{Cov}_1 = \sum_{l=1}^{L} (CX_l)(CX_l^*)$ ; déterminer le vecteur propre associée à la plus grande valeur propre de la matrice $\text{Cov}_1$ en tant qu' estimée Â du vecteur A ; déterminer les amplitudes complexes $s_l$ du premier signal, filtrées sur les M - 1 voies non mélangées, au facteur réel positif près, $\mu$, en calculant les grandeurs $\xi_l$ à partir du produit scalaire hermitien des vecteurs Â et $CX_l$ selon la relation : $\xi_l = \hat{A}^* CX_l (= \widehat{\mu s_l})$ ; diagonaliser la matrice $\text{Cov}_2$ définie comme : $\text{Cov}_2 = \sum_{l=1}^{L} (CZ_l)(CZ_l^*)$ ; déterminer le vecteur propre associée à la plus grande valeur propre de la matrice $\text{Cov}_2$ en tant qu' estimée $\overline{\hat{A}}$ du vecteur $\overline{A}$ ; déterminer les amplitudes complexes $s_l'$ du second signal, filtrées sur les M - 1 voies non mélangées, à un facteur réel positif près, $\mu_2$, en calculant les grandeurs $\eta_l$ à partir du produit scalaire hermitien des vecteurs $\overline{\hat{A}}$ et $CZ_l$, selon la relation : $\eta_l = \overline{\hat{A}}^* CZ_l (= \widehat{\mu s_l'})$.

-    calculer la phase interférométrique $\varphi$ du premier signal sur la voie de mélange consiste à estimer le scalaire complexe $z = \dfrac{v e^{i\varphi}}{\mu}$, où v est le module de la composante du vecteur directionnel sur la voie de mélange du premier signal, en

recherchant la grandeur $\hat{z}$ qui minimise l'erreur quadratique $|y_l - z\xi_l - \overline{z}\eta_l|^2$, où les $y_l$ sont les mesures scalaires sur la voie de mélange.

- après l'étape d'estimation des phases interférométriques du premier signal, le procédé comporte une étape consistant à estimer le module du vecteur directionnel réduit aux voies de mélange, et l'amplitude de la composante du vecteur directionnel sur la voie de mélange, pour le premier signal : $\hat{\mu} = \frac{1}{\sqrt{1+|\hat{z}^2|}}, \hat{v} = \frac{|\hat{z}|}{\sqrt{1+|\hat{z}^2|}}$.

- l'étape consiste à estimer le vecteur directionnel du premier signal : $\hat{V} = \begin{pmatrix} \hat{\mu}\hat{A} \\ \hat{v}e^{i\hat{\varphi}} \end{pmatrix}$.

L'invention, selon la revendication indépendante 7, a également pour objet un produit programme d'ordinateur, comportant des instructions propres lorsqu'elles sont exécutées par un ordinateur à mettre en oeuvre le procédé précédent.

L'invention, selon la revendication indépendante 8, a également pour objet un goniomètre interférométrique, ledit goniomètre comportant M voies de réception, M étant un entier supérieur ou égal à quatre, chaque voie de réception comportant successivement une antenne, un module de réception analogique et un module de réception numérique, le module de réception numérique fonctionnant à une fréquence d'échantillonnage qui lui est propre et délivrant périodiquement une grille temps-fréquence, chaque case de la grille temps/fréquence contenant une mesure complexe, l'espace temps/fréquence étant subdivisé en domaines, un domaine étant replié sur une fenêtre de la bande d'échantillonnage d'une voie de réception, une fenêtre comportant $L$ cases, caractérisé en ce que, dans le cas où, sur une voie de réception, une fréquence porteuse d'un signal d'intérêt est située au voisinage d'un multiple de la moitié de la fréquence d'échantillonnage de ladite voie de réception, le motif de bande latérale supérieure et le motif de bande latérale inférieure du spectre du signal d'intérêt se mélangeant alors dans la fenêtre correspondante de la bande d'échantillonnage de ladite voie de réception, dite voie de mélange, les autres voies de réception étant dites voies sans mélange, le goniomètre interférométrique est adapté pour exécuter les instructions du produit programme d'ordinateur précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- Les figures 1 et 2 illustrent deux situations de mélange entre les motifs de bande latérale d'un même signal réel dont la fréquence est à cheval sur deux zones de Nyquist voisines ;
- La figure 3 est une représentation schématique d'un interféromètre adapté pour mettre en œuvre le procédé selon l'invention ;
- La figure 4 illustre le repliement de la bande de réception ; et,
- La figure 5 est une représentation schématique sous forme de blocs du procédé selon l'invention.

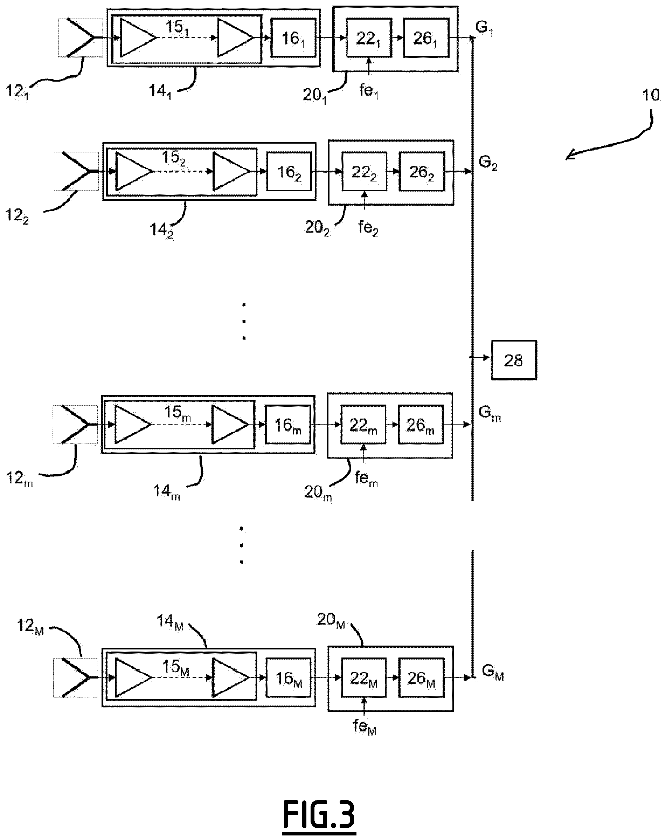

En se référant à la figure 3, un interféromètre 10 comprend une pluralité de M antennes, $12_1$, ..., $12_m$, ... $12_M$, où l'indice m de chaque antenne est un nombre entier compris entre 1 et M, avec M entier supérieur ou égal à 4. Les antennes sont identiques entre elles. Il s'agit d'antennes très large bande.

Pour la suite, l'indice m sert également de référence à tous les éléments qui sont rattachés à une même antenne $12_m$: moyens matériels, mesures, grandeurs diverses, etc.

Chaque antenne est associée à une voie de réception comportant successivement une chaîne de réception analogique, $14_1$, ..., $14_m$, ... $14_M$, et une chaîne de réception numérique $20_1$, ..., $20_m$, ... $20_M$.

Chaque chaîne de réception analogique $14_m$, placée immédiatement derrière l'antenne $12_m$, comporte une chaîne d'amplification $15_m$, un module de filtrage analogique $16_m$. Ce dernier sélectionne une bande de réception, $[0, f_{max}]$, qui est une très large bande de fréquence, typiquement quelques gigahertz à quelques dizaines de gigahertz.

Chaque chaîne de réception numérique $20_m$ comporte un module de conversion analogique-numérique $22_m$ suivi d'un module de traitement numérique du signal $26_m$.

Le module de conversion analogique-numérique $22_m$ est associé à une fréquence d'échantillonnage $fe_m$. Il est propre à effectuer un échantillonnage des signaux réels délivrés par le module $16_m$ à la fréquence d'échantillonnage $fe_m$.

La fréquence d'échantillonnage $fe_m$ ne respecte pas le critère de Nyquist-Shannon, de telle sorte qu'il y a du repliement spectral. La fréquence d'échantillonnage $fe_m$ reste cependant bien supérieure à l'étalement spectral des signaux d'intérêt. Ainsi le spectre des signaux d'intérêt est préservé, mais il est translaté d'un multiple de la fréquence d'échantillonnage $fe_m$, dans la bande repliée $[-fe_m/2, fe_m/2]$.

Le module de traitement numérique du signal $26_m$ est propre à traiter les signaux réels échantillonnés.

Il effectue des analyses spectrales du signal numérisé délivré en sortie du module $22_m$. Il met par exemple et de préférence en œuvre des Transformées de Fourier Discrètes - TFD, de préférence pondérées.

L'interféromètre 10 comporte également un calculateur 28, commun aux $M$ voies de réception de l'interféromètre et qui collecte les mesures obtenues en sortie de chacun des $M$ modules de traitement numérique du signal, $26_1$ à $26_M$.

Le calculateur 28 est un ordinateur comportant des moyens de mémorisation et des moyens de calcul. Les moyens de mémorisation sont propres à stocker les instructions de programmes d'ordinateur. Les moyens de calcul sont propres à exécuter lesdites instructions.

Le calculateur 28 est notamment propre à déterminer la direction d'arrivée de chacun des signaux d'intérêt reçus sur les antennes $12_1$ à $12_M$ par l'exécution d'un programme permettant la mise en œuvre du procédé selon l'invention.

Les fréquences d'échantillonnage $fe_m$ sont choisies différentes les unes des autres. Dit autrement, une valeur de fréquence d'échantillonnage n'est affectée qu'à un seul module de conversion analogique-numérique $22_m$.

L'interféromètre 10 dispose donc de $M$ valeurs de fréquences d'échantillonnage afin de permettre de lever les ambiguïtés en fréquence lorsqu'on passe des fréquences mesurées dans la première bande de Nyquist des différentes voies de réception, à la fréquence finale déterminée dans la bande de réception.

Chaque module de traitement numérique du signal $26_m$ effectue, au cours du temps, une succession de TFD du signal qui lui est présenté par le module $22_m$. Les TFD successivement réalisées dans le temps sont « empilées » afin d'obtenir une représentation temps-fréquence, ou grille temps-fréquence $G_m$.

Chacune des TFD réalisée par le module $26_m$ prélève, pendant des intervalles temporels de durée $\Delta T_m$ , les signaux analytiques échantillonnés avec la fréquence $fe_m$ ; chacune des TFD prélève par conséquent un nombre d'échantillons $N_m$ :

$$N_m = \Delta T_m . fe_m .$$

Afin d'obtenir des informations de même résolution spectrale $\Delta F$ sur toutes les voies de réception, on impose, pour toutes les valeurs de $m$ :

$$\frac{N_m}{fe_m} = \Delta T_m = \Delta T = \frac{1}{\Delta F}$$

De plus, pour avoir des informations synchrones aux différentes TFD réalisées par les modules $26_m$, on impose un début et une fin d'acquisition communes aux différentes TFD.

On note que, si toutes les TFD n'ont pas la même résolution spectrale le fonctionnement du procédé selon l'invention est dégradé, mais reste possible.

On note que les intervalles de temps successivement analysés peuvent être contigus ou partiellement recouvrants. Dans un souci de simplicité, on supposera, dans toute la suite, que les intervalles de temps sont contigus.

En raison de la propriété de symétrie hermitienne du spectre des signaux réels bande étroite, on conserve, dans la grille temps-fréquence $G_m$, uniquement les canaux d'analyse spectrale compris entre 0 et $fe_m/2$, sans que cela constitue une perte de généralité.

Pour un signal réel S occupant dans la bande de réception un canal de largeur $\Delta F$, centré sur la fréquence $f = k\Delta F$, la partie de son spectre prélevée par l'analyse spectrale dans l'intervalle $[0, fe_m/2]$ est soit le motif de la bande latérale supérieure, soit le motif de la bande latérale inférieure :

- si $r$, le reste de la division entière de $k$ par $N_m$, est compris strictement entre 0 et $N_m/2$, le motif de bande latérale supérieure du signal se replie dans l'intervalle $\left]0, \frac{fe_m}{2}\right[$, sur la fréquence $r\Delta F$ ; et le motif de bande latérale inférieure du signal se replie dans l'intervalle $\left]-\frac{fe_m}{2}, 0\right[$. La partie du spectre prélevée dans $\left]0, \frac{fe_m}{2}\right[$ est donc le motif de la bande latérale supérieure, $S^+$.

- Si $r$, le reste de la division entière de $k$ par $N_m$, est compris strictement entre $N_m/2$ et $N_m$; alors le motif de bande latérale supérieure du signal se replie dans l'intervalle $\left]-\frac{fe_m}{2}, 0\right[$, et le motif de bande latérale inférieure du signal se replie dans l'intervalle $\left]0, \frac{fe_m}{2}\right[$, sur la fréquence $\left(\frac{N_m}{2} - r\right)\Delta F$. La partie du spectre prélevée dans $\left]0, \frac{fe_m}{2}\right[$ est donc le motif de la bande latérale inférieure, $S^-$ .

- Si $r$, le reste de la division entière de $k$ par $N_m$, est égal à 0 ou $N_m/2$, le signal est à cheval sur deux zones de Nyquist différentes.

Ainsi, pour un signal réel S occupant plusieurs canaux, la partie du spectre prélevé est soit la bande latérale supérieure, notée $S^+$, soit la bande latérale inférieure, notée $S^-$, soit un mélange de $S^+$ et de $S^-$, si pour un indice $m$ donné, la fréquence porteuse dudit signal est proche de $fe_m$ ou de $fe_m/2$.

Chaque case de la grille $G_m$ contient un scalaire complexe qui est indicé par $m$ indice de la voie ($m$ est aussi l'indice de la fréquence d'échantillonnage associée à cette voie de l'interféromètre), par $i$ en temps avec une résolution $\Delta T$, et par $j$ en fréquence avec une résolution $\Delta F$.

Les grilles en sortie des différentes voies sont mises à jour périodiquement et simultanément, au rythme des transformées de Fourier. Les traitements qui suivent peuvent être effectués dans le flot, au rythme des transformées de Fourier, ou sur des lots (« batchs » en anglais) de plusieurs transformées de Fourier consécutives.

On note que les M grilles sont superposables en temps et en fréquence, mais ne comportent pas le même nombre de cases selon l'axe fréquentiel, la largeur de la première bande de Nyquist étant fonction de la fréquence d'échantillonnage $fe_m$.

La durée d'un intervalle de temps $\Delta T$ est, en général, plus courte que celle des signaux d'intérêt. En conséquence, un signal d'intérêt apparaît sur plusieurs cases temps/fréquence successives dans le temps, c'est-à-dire sur plusieurs cases adjacentes selon l'axe temporel.

Un signal d'intérêt apparaît aussi dans plusieurs cases temps/fréquence adjacentes fréquentiellement, car son spectre n'est pas nécessairement centré dans un des canaux de la TFD, sa largeur spectrale pouvant être supérieure à $\Delta F$.

Un signal d'intérêt est ainsi généralement perçu, par les analyses spectrales successives dans le temps, sur un ensemble de plusieurs cases temps/fréquences adjacentes en temps et en fréquence.

Un signal reçu est donc modélisé et traité sur des domaines temps/fréquence correspondant chacun au produit cartésien d'un intervalle temporel égal à quelques TFD successives, par un intervalle fréquentiel égal à quelques canaux.

Les domaines temps/fréquence sont définis de manière à découper la bande de réception $[0, f_{max}]$, en intervalles fréquentiels, de largeur fréquentielle $L_2 \times \Delta F$, où $L_2$ est un entier naturel ; et l'axe temporel, en intervalles temporels, de durée $L_1 \times \Delta T$, où $L_1$ est un entier naturel.

Un domaine temps/fréquence $D_{i,k}$ est repéré par un indice temporel $i$ et par un indice fréquentiel $k$, qu'on peut par exemple choisir respectivement égaux au minimum des indices de TFD sur ce domaine, et au minimum des indices des intervalles fréquentiels sur ce domaine. Ainsi, un domaine indicé par $i$ et $k$ correspond au produit cartésien de l'intervalle $[i \Delta T; (i + L_1)\Delta T] \times [k\Delta F; (k + L_2)\Delta F]$.

Après sous-échantillonnage, un domaine temps/fréquence se replie dans $M$ intervalles temps / fréquence, appelés fenêtres.

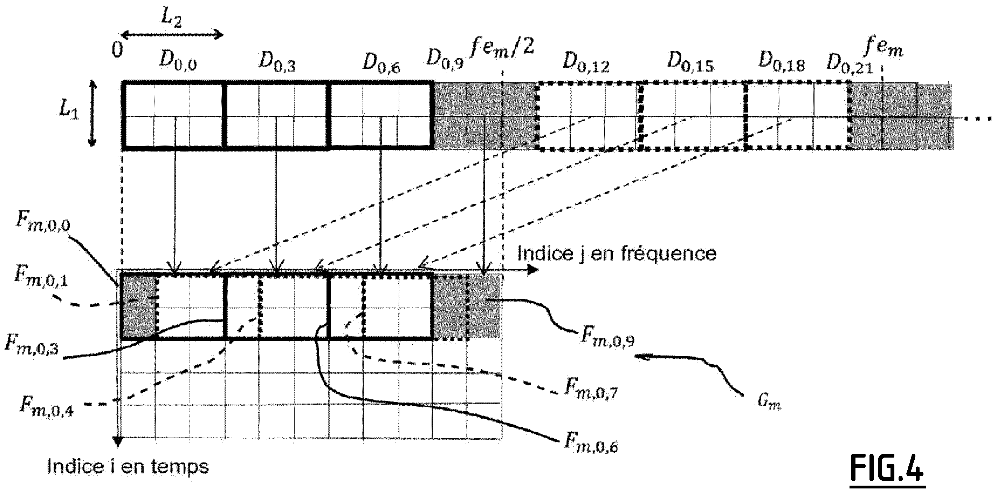

Comme illustré par la figure 4, à chaque domaine $D_{i,k}$ correspond ainsi, par repliement, une fenêtre $F_{m,i,j}$ de la grille temps-fréquence $G_m$ après échantillonnage à $fe_m$. Les fenêtres sont indicées par $m$ (indice de la voie), par $i$ et par $j(k, m)$, qui est le reste de la division entière de k par $N_m$.

Ces fenêtres sont définies modulo $fe_m$. Autrement dit, les fenêtres sont composées de cases consécutives en temps (indices temporels consécutifs), et en fréquence modulo $fe_m$ (indices fréquentiels consécutifs modulo $N_m$).

Les domaines dont les fenêtres ne sont pas constituées de cases consécutives au sens strict, mais modulo $N_m$, sont les domaines situés à la limite entre deux zones de Nyquist successives. C'est par exemple le cas du domaine $D_{0,9}$ de la figure 4, qui est replié sur la fenêtre $F_{m,0,9}$ comportant les cases d'indice fréquentiel 9, 10 et 0.

Un ordre de lecture des $L$ cases d'une même fenêtre est choisi arbitrairement et identiquement pour toutes les fenêtres. Par exemple, les cases d'une fenêtre sont d'abord lues selon l'axe des fréquences, puis selon l'axe du temps.

Ainsi, par commodité d'écriture, les indices de temps et de fréquence des cases sont remplacés par un indice $l$ unique selon l'ordre de lecture, de telle sorte qu'une case temps/fréquence est finalement désignée par deux indices, $m$, l'indice de l'antenne, et $l$, l'indice temps/fréquence.

Dans la suite, on ne s'intéresse qu'aux domaines qui sont situés à la limite entre deux zones de Nyquist successives, pour une des fréquences d'échantillonnage. Sans que cela ait de caractère limitatif, on supposera que la voie de réception sur laquelle se produit ce phénomène est la voie d'indice $M$. On supposera qu'aucune des fenêtres dans lesquelles se replie le domaine ne contient un mélange dû à la présence de plusieurs signaux différents.

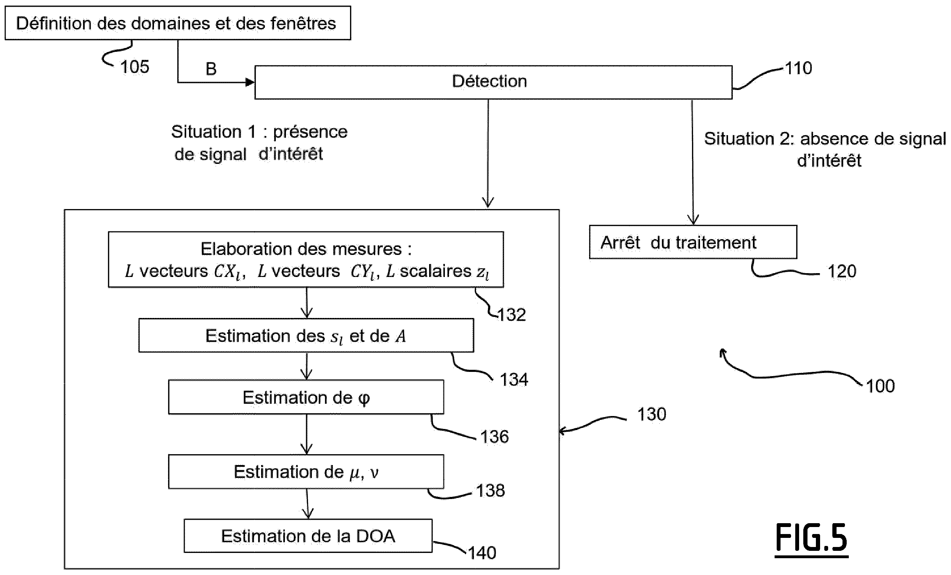

Sur ces prémices, un mode de réalisation du procédé 100 selon l'invention va être présenté en référence à la figure 5.

Le procédé 100 débute par une étape 105, réalisable en temps réel ou hors ligne, qui permet, pour tout domaine temps/fréquence $D_{i,k}$ de l'espace temps/fréquence (référencé par son indice temporel i et son indice fréquentiel k) et pour toute voie m, d'extraire et de mémoriser l'indice r(k, m), et d'établir la liste B des domaines $D_{i,k}$, pour lesquels, dans une des voies d'indice $m$, la fenêtre associée à ce domaine est à la limite entre deux bandes de Nyquist.

L'étape 105 consiste également, pour chaque domaine de la liste B, à prélever, dans les M grilles temps/-fréquence délivrées par chacune des voies de réception, les mesures des cases des fenêtres associées au domaine d'un motif de bande latérale supérieure en tant que premier signal ($S^+$) et les mesures des cases de des fenêtres associées au domaine d'un motif de bande latérale inférieure en tant que second signal ($S^-$).

Puis une étape de détection 110 examine l'ensemble des domaines de la liste B fournie en sortie de l'étape 105 et détecte ceux contenant effectivement un signal d'intérêt.

Par exemple, on extrait les *M* fenêtres correspondant au domaine considéré sur les différentes voies, dont la voie *M* sur laquelle le domaine est repliée sur une fenêtre non-continue.

On calcule la somme quadratique des échantillons des *L* cases de l'ensemble des fenêtres correspondant au domaine, sauf la fenêtre d'indice *M*.

Puis, on compare la valeur obtenue à un seuil prédéfini, fixé pour respecter un taux de fausse alarme spécifié.

Si la valeur est supérieure au seuil, on considère que l'on est dans une première situation où il y a présence d'un signal d'intérêt.

A défaut, on considère que l'on est dans une seconde situation où il y a absence de signal d'intérêt (présence de bruit seul).

Pour tout domaine relevant de la seconde situation, dans le mode de réalisation actuellement préféré, le procédé 100 passe à l'étape 120 où il est abandonné.

Pour tout domaine relevant de la première situation, le procédé met en œuvre un traitement particulier 130.

La première situation correspond donc à celle où un signal d'intérêt *S,* émis par une source SO et présent dans un domaine, se parasite lui-même sur la fenêtre de la voie M.

Le traitement 130 est fondé sur l'exploitation des mesures sur les fenêtres 1 à *M* - 1 où il n'y a pas de mélange, puis sur l'exploitation des mesures sur la fenêtre *M* où il y a mélange.

Le traitement 130 débute par une étape 132, au cours de laquelle des vecteurs de mesures sont construits à partir des cases des fenêtres.

Le signal d'intérêt est appelé *S*. Le procédé considère que les motifs de bande latérale supérieure et de bande latérale inférieure sont les spectres de deux signaux différents, appelés premier signal $S^+$ et second signal $S^-$.

Les mesures des différentes fenêtres sans mélange du premier signal sont mises sous la forme de *L* vecteurs $CX_l$. Un vecteur $CX_l$ est donc de dimension *M* - 1 :

$$CX_l = \begin{pmatrix} cx_{l,1} \\ \vdots \\ cx_{l,M-1} \end{pmatrix}$$

De même, les mesures des différentes fenêtres sans mélange du second signal, sont mises sous la forme de *L* vecteurs $CZ_l$, Un vecteur $CZ_l$ est donc de dimension *M* - 1:

$$CZ_l = \begin{pmatrix} cz_{l,1} \\ \vdots \\ cz_{l,M-1} \end{pmatrix}$$

Enfin, les mesures prélevées sur la fenêtre où se produit le mélange correspondent à *L* scalaires $y_l$ (*l* compris entre 1 et *L*).

Le procédé 100 passe ensuite à l'estimation des paramètres des premier et second signaux. Cette estimation est fondée sur les équations suivantes :

$$\begin{cases} CX_l = & s_l U + W_{1l} \\ y_l = & ve^{i\varphi}s_l + ve^{-i\varphi}s_l' + w_{2l} \\ CZ_l = & s_l'\overline{U} + W_{3l} \end{cases} , l \in [1, L]$$

Dans cette modélisation, $s_l$ et $s_l'$ sont respectivement les amplitudes complexes du premier signal et du second signal. Les $s_l$ et les $s_l'$ sont conjugués deux à deux, mais le vecteur $\begin{pmatrix} s_1 \\ \vdots \\ s_L \end{pmatrix}$ n'est pas égal à $\begin{pmatrix} \overline{s_1'} \\ \vdots \\ \overline{s_L'} \end{pmatrix}$. Pour simplifier les calculs, intentionnellement, le procédé ne fait pas d'hypothèse sur la relation entre les $s_l$ et les $s_l'$. Ils sont considérés comme indépendants.

Dans cette modélisation, les vecteurs « directionnels » des premier et second signaux sont conjugués l'un de l'autre, normés, et valent respectivement $\begin{pmatrix} U \\ ve^{i\varphi} \end{pmatrix}$ et $\begin{pmatrix} \overline{U} \\ ve^{-i\varphi} \end{pmatrix}$, où v est un réel positif ; *U* est le vecteur directionnel (« steering vector » en anglais) réduit aux voies non mélangées ; et *ve^{iφ}* est le vecteur directionnel réduit à la voie où se produit le mélange, v est le module du vecteur directionnel réduit à la voie de mélange, et $\varphi$ la phase du vecteur directionnel (appelée ici phase interférométrique) sur la voie de mélange. Ces vecteurs sont normés de sorte que $\|U\|^2 + v^2 = 1$. Dans la suite on écrira $U = \mu A$, où $A$ est normé.

Enfin, dans cette modélisation, les bruits $W_{1l}$, $w_{2l}$, $W_{3l}$ sont gaussiens, centrés, indépendants en $l$ et entre eux.

La difficulté de savoir de quoi est constitué le mélange est surmontée en considérant le motif de bande latérale supérieure comme un premier signal et le motif de bande latérale inférieure comme un second signal, indépendant du premier.

Pour résoudre ces équations, dans une première étape 134, on considère d'abord uniquement les vecteurs $CX_l$, c'est-à-dire les mesures sans mélange du premier signal, $S_1$, de manière indépendante des autres mesures.

La matrice $Cov_1$, matrice de covariance des mesures sans mélange pour le premier signal, est alors calculée à partir des $L$ vecteurs de mesures $CX_l$, $l \in [1, L]$ :

$$Cov_1 = \sum_{l=1}^{L} CX_l CX_l^*$$

où l'opérateur * dénote l'opérateur transposé conjugué.

La matrice $Cov_1$ est ensuite diagonalisée afin d'obtenir l'estimée $\hat{A}$ du vecteur $A$, qui est le vecteur propre associé à la plus grande valeur propre de la matrice $Cov_1$.

Les amplitudes complexes $s_l$ du premier signal, filtrées sur les $M$ - 1 voies de mesure où il est observé seul, sont alors calculables à un facteur réel positif près, $\mu$. Pour cela les grandeurs $\xi_l$ sont alors déterminées à partir du produit scalaire hermitien des vecteurs $\hat{A}$ et $CX_l$ :

$$\xi_l = \hat{A}^* CX_l (= \widehat{\mu s_l})$$

Les phases du vecteur directionnel du premier signal $S_1$ sur les voies sans mélange sont obtenues en calculant l'argument de chaque composante de $\hat{A}_1$.

On considère ensuite uniquement les vecteurs $CZ_l$, c'est-à-dire les mesures sans mélange du second signal, $S_2$, de manière indépendante des autres mesures.

La matrice $Cov_2$, matrice de covariance des mesures sans mélange pour le premier signal, est alors calculée à partir des $L$ vecteurs de mesures $CZ_l$, $l \in [1,L]$ :

$$Cov_2 = \sum_{l=1}^{L} CZ_l CZ_l^*$$

où l'opérateur * dénote l'opérateur transposé conjugué.

La matrice $Cov_2$ est ensuite diagonalisée afin d'obtenir l'estimée $\hat{A}$ du vecteur $A$, qui est le vecteur propre associé à la plus grande valeur propre de la matrice $Cov_2$.

Les amplitudes complexes $s_l'$ du second signal, filtrées sur les $M$ - 1 voies de mesure où il est observé seul, sont calculées au facteur à un facteur réel positif $\mu$ près. Pour cela, on détermine les grandeurs $\eta_l$ à partir du produit scalaire hermitien du vecteur $\hat{A}$, qui est le conjugué de l'estimée du vecteur $\overline{A}$, et de $CZ_l$ :

$$\eta_l = \bar{\hat{A}}^* CZ_l (= \widehat{\mu s_l'}).$$

Le procédé 100 passe ensuite à l'étape 136 consistant à considérer maintenant également la voie $M$ sur laquelle il y a mélange des premier et second signaux pour estimer la phase interférométrique $\varphi$ du premier signal dans la voie où se produit le mélange. Cette étape utilise les grandeurs $\xi_l$ et $\eta_l$ obtenues à l'étape 134 et les L scalaires complexes $y_l$ de la voie M où se produit le mélange. Cette estimation est fondée sur la réécriture de l'équation sur la voie de mélange de la modélisation sous la forme suivante :

$$y_l = z\xi_l + \bar{z}\eta_l + w_{2l}$$

Dont l'inconnue est : $z = \dfrac{ve^{i\varphi}}{\mu}$ et où $\overline{(.)}$ désigne l'opérateur « conjugué de ».

L'estimation consiste alors à rechercher le scalaire complexe *z* qui minimise

$$|y_l - z\xi_l - \bar{z}\eta_l|^2$$

Ce qui est obtenu en calculant l'estimée de z selon les relations suivantes :

$$\hat{z} = \frac{ac-b\bar{c}}{a^2-|b|^2} \text{ où} : a = \sum_l \left(\left|\hat{\xi}_l\right|^2 + |\hat{\eta}_l|^2\right) ; b = 2\sum_l \bar{\hat{\xi}}_l \eta_l; c = \sum_l \left(\bar{\hat{\xi}}_l y_l + \hat{\eta}_l \bar{y}_l\right)$$

L'étape 136 se termine par le calcul de l'estimation de la phase du vecteur directionnel normé *V* sur la voie de mélange :

$$\hat{\varphi} = arg(\hat{z}).$$

A l'issue de cette étape, les estimées des phases de toutes les composantes de *V* sont disponibles. Il est donc possible de calculer la direction d'arrivée du signal par goniométrie de phase.

Dans une variante de réalisation, le procédé comporte une étape supplémentaire 138 permettant, après avoir calculé *φ,* de calculer les estimées suivantes :

$$\hat{\mu} = \frac{1}{\sqrt{1+|\hat{z}^2|}}, \hat{v} = \frac{|\hat{z}|}{\sqrt{1+|\hat{z}^2|}},$$

Ce qui permet d'obtenir une estimation du vecteur directionnel du signal d'intérêt :

$$\hat{V} = \begin{pmatrix} \hat{\mu}\hat{A} \\ \hat{v}e^{i\hat{\varphi}} \end{pmatrix}$$

Le procédé 100 peut passer alors à l'étape 140 de calcul de la direction d'arrivée du signal d'intérêt par goniométrie d'amplitude et de phase.

Dans la présente description a été traité en détail le cas où, sur une voie de réception, la fréquence porteuse du signal d'intérêt est située au voisinage d'un multiple de la moitié de la fréquence d'échantillonnage, ce qui a pour effet que le motif de bande latérale supérieure et le motif de bande latérale inférieure du spectre se mélangent dans le spectre du signal sous-échantillonné.

L'homme du métier constatera qu'avec un récepteur mettant en œuvre le procédé précédent il est possible d'améliorer la détermination de la direction d'arrivée d'un signal intercepté en considérant, en plus des mesures sur les voies où les motifs du spectre ne se replient pas l'un sur l'autre, les mesures sur la voie où les motifs du spectre se replient l'un sur l'autre. L'invention permet de séparer, dans la phase des mesures, la contribution de la phase propre du signal d'intérêt et la contribution de la phase interférométrique, et ceci grâce au prélèvement de plusieurs mesures sur chaque voie de réception.

L'invention tire également profit du fait que le mélange ne se produit que sur une voie de réception. Cette voie est unique puisque le plan de fréquences du récepteur interférométrique est choisi tel qu'une fréquence ne peut être simultanément multiple de deux demi-fréquences d'échantillonnages distinctes, c'est-à-dire tel que deux demi-fréquences d'échantillonnage distinctes de deux voies de réception ne peuvent avoir de multiple commun dans la bande large de fréquence à intercepter.

En conséquence, les mesures sur les autres voies de réception ne sont pas mélangées et autorisent un traitement partiel du type mono-source. Cette remarque permet de proposer une modélisation simple conduisant à une solution approchée avec une quantité de calculs raisonnable. Ceci est adapté aux applications temps réel et aux applications embarquées.

La modélisation du mélange correspond à un mélange entre deux sources distinctes, dont les vecteurs directionnels sont conjugués l'un de l'autre.

**Revendications**

1. Procédé (100) de détection d'un signal électromagnétique d'intérêt et d'estimation de sa direction d'arrivée, ledit procédé étant mis en œuvre par un goniomètre interférométrique à large bande de réception et à réception numérique sous-échantillonnée, ledit goniomètre interférométrique comportant M voies de réception, M étant un entier supérieur ou égal à quatre, chaque voie de réception comportant successivement une antenne ($12_m$), un module de réception analogique ($14_m$) et un module de réception numérique ($20_m$), le module de réception numérique fonctionnant à une fréquence d'échantillonnage ($fe_m$) qui lui est propre et délivrant périodiquement une grille temps-fréquence ($G_m$) fournie par une succession d'analyses spectrales, chaque case de la grille temps/fréquence contenant une mesure complexe, **caractérisé en ce que**, dans le cas où, sur une voie de réception, une fréquence porteuse du signal d'intérêt est située au voisinage d'un multiple de la moitié de la fréquence d'échantillonnage de ladite voie de réception, le motif de bande latérale supérieure et le motif de bande latérale inférieure du spectre du signal d'intérêt se mélangeant après repliement dans ladite voie de réception, dite voie de mélange, les autres voies de réception étant dites voies sans mélange, le procédé comporte les étapes consistant à :

- définir (105) des domaines temps/fréquence ($D_{i,k}$) en subdivisant l'espace temps/fréquence, chaque domaine temps/fréquence correspondant chacun au produit cartésien d'un intervalle temporel égal à la durée de quelques analyses spectrales successives, par un intervalle fréquentiel égal à quelques canaux d'analyse spectrale, chaque domaine étant replié sur une fenêtre ($F_{m,i,j}$) dans la voie de réception $m$, une fenêtre comportant $L$ cases ;
- détecter (110) la présence éventuelle d'un signal d'intérêt en comparant l'énergie contenue dans les fenêtres sans mélange à un seuil, et prélever (105), dans les M grilles temps/fréquence délivrées par chacune des voies de réception, les mesures des cases des fenêtres associées au domaine du motif de bande latérale supérieure en tant que premier signal ($S^+$) et les mesures des cases de des fenêtres associées au domaine du motif de bande latérale inférieure en tant que second signal ($S^-$),
- élaborer (132) des vecteurs de mesure à partir des mesures prélevées de telle sorte que : les mesures du premier signal sur les voies sans mélange soient mises sous la forme de $L$ premiers vecteurs de mesures ($CX_l$) ; les mesures du second signal sur les voies sans mélanges soient mises sous la forme de $L$ seconds vecteurs de mesures ($CZ_l$) ; et les mesures sur la voie mélangée correspondent à $L$ scalaires ($y_l$) ;
- estimer (134) d'une part les amplitudes complexes, à un coefficient de normalisation près, du premier signal et le vecteur directionnel réduit aux voies sans mélange et normalisé du premier signal, uniquement à partir des $L$ premiers vecteurs de mesure ($CX_l$) ; et d'autre part les amplitudes complexes, à un coefficient de normalisation près, du second signal et le vecteur directionnel réduit aux voies sans mélange et normalisé du second signal, uniquement à partir des $L$ seconds vecteurs de mesure ($CZ_l$) ;
- calculer (136) les phases interférométriques du premier signal sur la voie de mélange à partir des amplitudes complexes estimées à partir des mesures sur la voies de mélange ;
- calculer (138) le module du vecteur directionnel réduit aux voies sans mélange, et l'amplitude de la composante du vecteur directionnel sur la voie de mélange, pour le premier signal ; et,
- déterminer (140) la direction d'arrivée du premier signal à partir des phases interférométriques ou à partir du vecteur directionnel estimé pour le premier signal, considéré comme le signal d'intérêt.

2. Procédé selon la revendication 1, dans lequel les étapes d'estimation des premier et second signaux sur les voies sans mélange sont fondées sur les équations suivantes :

$$\begin{cases} CX_l = s_l U + W_{1l} \\ CZ_l = s_l' \overline{U} + W_{3l} \end{cases}, l \in [1, L]$$

où : $CX_l$ sont les premiers vecteurs de mesures ; $CZ_l$ sont les seconds vecteurs de mesures ; $s_l$ et $s_l'$ sont les amplitudes complexes du premier signal et du second signal respectivement ; $U$ et $\overline{U}$ sont des vecteurs directionnels réduits aux voies non mélangées ; et $W_{1l}$, $W_{3l}$ sont des bruits gaussiens, centrés, indépendants en 1 et entre eux.

3. Procédé selon la revendication 2, dans lequel, les vecteurs directionnels réduits aux voies non mélangées, $U$ et $\overline{U}$, n'étant pas normés, un vecteur $A$ normé et un réel positif $\mu$ sont introduits, tels que $U = \mu A$ et l'étape (134) d'estimation consiste à :

- diagonaliser la matrice $Cov_1$ définie comme :

$$Cov_1 = \sum_{l=1}^{L}(CX_l)(CX_l^*) ;$$

- déterminer le vecteur propre associée à la plus grande valeur propre de la matrice $Cov_1$ en tant qu' estimée $\hat{A}$ du

vecteur A ;

- déterminer les amplitudes complexes $s_l$ du premier signal, filtrées sur les M - 1 voies non mélangées, au facteur réel positif près, $\mu$, en calculant les grandeurs $\xi_l$ à partir du produit scalaire hermitien des vecteurs $\hat{A}$ et $CX_l$ selon la relation :

$$\xi_l = \hat{A}^* CX_l (= \widehat{\mu s_l})$$

- diagonaliser la matrice $Cov_2$ définie comme :

$$Cov_2 = \sum_{l=1}^{L} (CZ_l)(CZ_l^*) \;;$$

- déterminer le vecteur propre associée à la plus grande valeur propre de la matrice $Cov_2$ en tant qu' estimée $\bar{\hat{A}}$ du vecteur $\overline{A}$;
- déterminer les amplitudes complexes $s'_l$ du second signal, filtrées sur les M - 1 voies non mélangées, à un facteur réel positif près, $\mu_2$, en calculant les grandeurs $\eta_l$ à partir du produit scalaire hermitien des vecteurs $\bar{\hat{A}}$ et $CZ_l$, selon la relation :

$$\eta_l = \bar{\hat{A}}^* CZ_l (= \widehat{\mu s'_l}).$$

4. Procédé selon la revendication 3, dans lequel calculer (136) la phase interférométrique $\varphi$ du premier signal sur la voie de mélange consiste à estimer le scalaire complexe $z = \dfrac{v e^{i\varphi}}{\mu}$, où v est le module de la composante du vecteur directionnel sur la voie de mélange du premier signal, en recherchant la grandeur $\hat{z}$ qui minimise l'erreur quadratique $|y_l - z\xi_l - \bar{z}\eta_l|^2$, où les $y_l$ sont les mesures scalaires sur la voie de mélange.

5. Procédé selon la revendication 4, dans lequel, après l'étape (136) d'estimation des phases interférométriques du premier signal, le procédé comporte une étape (138) consistant à estimer le module du vecteur directionnel réduit aux voies de mélange, et l'amplitude de la composante du vecteur directionnel sur la voie de mélange, pour le premier signal :

$$\hat{\mu} = \frac{1}{\sqrt{1 + |\hat{z}^2|}}, \; \hat{v} = \frac{|\hat{z}|}{\sqrt{1 + |\hat{z}^2|}}.$$

6. Procédé selon la revendication 5, dans lequel l'étape (138) consiste à estimer le vecteur directionnel du premier signal :

$$\hat{V} = \begin{pmatrix} \hat{\mu}\hat{A} \\ \hat{v}e^{i\hat{\varphi}} \end{pmatrix}.$$

7. Produit programme d'ordinateur, comportant des instructions propres lorsqu'elles sont exécutées par un ordinateur (28) à mettre en œuvre un procédé, **caractérisé en ce que** :

- ledit procédé est un procédé conforme à l'une quelconque des revendications 1 à 6 ; et,
- l'ordinateur (28) fait partie d'un goniomètre interférométrique, ledit goniomètre interférométrique comportant M voies de réception, M étant un entier supérieur ou égal à quatre, chaque voie de réception comportant successivement une antenne ($12_m$), un module de réception analogique ($14_m$) et un module de réception numérique ($20_m$), le module de réception numérique fonctionnant à une fréquence d'échantillonnage ($fe_m$) qui lui est propre et délivrant périodiquement une grille temps-fréquence ($G_m$), chaque case de la grille temps/fréquence contenant une mesure complexe, l'espace temps/fréquence étant subdivisé en domaines ($D_{i,k}$), un domaine étant replié sur une fenêtre ($F_{m,i,j}$) de la bande d'échantillonnage d'une voie de réception, une fenêtre comportant $L$ cases, une fréquence porteuse d'un signal d'intérêt étant située, sur une voie de réception, au voisinage d'un multiple de la moitié de la fréquence d'échantillonnage de ladite voie de réception, le motif de bande latérale supérieure et le motif de bande latérale inférieure du spectre du signal d'intérêt se mélangeant alors dans la fenêtre correspondante de la bande d'échantillonnage de ladite voie de réception, dite voie de mélange, les autres voies de réception étant dites voies sans mélange.

8. Goniomètre interférométrique (10), ledit goniomètre comportant M voies de réception, M étant un entier supérieur ou égal à quatre, chaque voie de réception comportant successivement une antenne (12$_m$), un module de réception analogique (14$_m$) et un module de réception numérique (20$_m$), le module de réception numérique fonctionnant à une fréquence d'échantillonnage (fe$_m$) qui lui est propre et délivrant périodiquement une grille temps-fréquence (G$_m$), chaque case de la grille temps/fréquence contenant une mesure complexe, l'espace temps/fréquence étant subdivisé en domaines (D$_{i,k}$), un domaine étant replié sur une fenêtre (F$_{m,i,j}$) de la bande d'échantillonnage d'une voie de réception, une fenêtre comportant L cases, **caractérisé en ce que**, dans le cas où, sur une voie de réception, une fréquence porteuse d'un signal d'intérêt est située au voisinage d'un multiple de la moitié de la fréquence d'échantillonnage de ladite voie de réception, le motif de bande latérale supérieure et le motif de bande latérale inférieure du spectre du signal d'intérêt se mélangeant alors dans la fenêtre correspondante de la bande d'échantillonnage de ladite voie de réception, dite voie de mélange, les autres voies de réception étant dites voies sans mélange, le goniomètre interférométrique est adapté pour exécuter les instructions d'un produit programme d'ordinateur conforme à la revendication 7.

**Patentansprüche**

1. Verfahren (100) zum Erfassen eines elektromagnetischen Signals von Interesse und zum Schätzen seiner Ankunftsrichtung, wobei das Verfahren von einem interferometrischen Goniometer mit breitem Empfangsband und digitalem Empfang mit Unterabtastung durchgeführt wird, das interferometrische Goniometer umfassend M Empfangskanäle, wobei M eine ganze Zahl größer als oder gleich wie vier ist, jeder Empfangskanal umfassend nacheinander eine Antenne (12$_m$), ein analoges Empfangsmodul (14$_m$) und ein digitales Empfangsmodul (20$_m$), wobei das digitale Empfangsmodul mit einer ihm eigenen Abtastfrequenz (fe$_m$) betrieben wird und periodisch ein Zeit-Frequenz-Gitter (G$_m$) ausgibt, das von einer Abfolge von Spektralanalysen bereitgestellt wird, jedes Feld des Zeit-Frequenz-Gitters eine komplexe Messung enthält, **dadurch gekennzeichnet, dass** in dem Fall, dass auf einem Empfangskanal eine Trägerfrequenz des Signals von Interesse in der Nähe eines Vielfachen der halben Abtastfrequenz des Empfangskanals liegt, sich das obere Seitenbandmuster und das untere Seitenbandmuster des Spektrums des Signals von Interesse nach Falten in dem Empfangskanal vermischen, bezeichnet als Mischkanal, wobei die anderen Empfangskanäle als Kanäle ohne Mischung bezeichnet werden, wobei das Verfahren die Schritte umfasst, die aus Folgendem bestehen:

   - Definieren (105) von Zeit-/Frequenzbereichen (D$_{i,k}$) durch Unterteilen des Zeit-/Frequenzraums, wobei jeder Zeit-/Frequenzbereich jeweils dem kartesischen Produkt aus einem Zeitintervall, das gleich wie die Dauer einiger aufeinanderfolgender Spektralanalysen ist, und einem Frequenzintervall, das gleich wie einige Kanäle der Spektralanalyse ist, entspricht, wobei jeder Bereich auf ein Fenster (F$_{m,i,j}$) in dem Empfangskanal *m* gefaltet wird, wobei ein Fenster *L* Felder umfasst;
   - Erkennen (110), ob ein Signal von Interesse vorhanden ist, indem die in den Fenstern enthaltene Energie ohne Mischen mit einem Schwellenwert verglichen wird, und Entnehmen (105), in den M Zeit/Frequenz-Gittern, die von jedem der Empfangskanäle bereitgestellt werden, der Messungen der Felder der Fenster, die mit dem Bereich des oberen Seitenbandmusters assoziiert sind, als erstes Signal ($S^+$) und der Messungen der Felder der Fenster, die mit dem Bereich des unteren Seitenbandmusters assoziiert sind, als zweites Signal ($S^-$),
   - Erstellen (132) von Messvektoren anhand der entnommenen Messungen, sodass: die Messungen des ersten Signals auf den ungemischten Kanälen in die Form von *L* ersten Messvektoren *(CX$_l$)* gebracht werden; die Messungen des zweiten Signals auf den ungemischten Kanälen in die Form von *L* zweiten Messvektoren *(CZ$_l$)* gebracht werden; und die Messungen auf dem gemischten Kanal *L* Skalaren *(y$_i$)* entsprechen;
   - Schätzen (134) einerseits der komplexen Amplituden, bis auf einen Normalisierungskoeffizienten, des ersten Signals und des auf die ungemischten und normalisierten Kanäle reduzierten Richtungsvektors des ersten Signals nur anhand der *L* ersten Messvektoren *(CX$_l$)*; und andererseits der komplexen Amplituden, bis auf einen Normalisierungskoeffizienten, des zweiten Signals und des auf die ungemischten und normalisierten Kanäle reduzierten Richtungsvektors des zweiten Signals nur anhand der *L* zweiten Messvektoren *(CZ$_l$)*;
   - Berechnen (136) der interferometrischen Phasen des ersten Signals auf dem Mischkanal anhand der komplexen Amplituden, die anhand der Messungen auf dem Mischkanal geschätzt werden;
   - Berechnen (138) des Moduls des Richtungsvektors, der auf die ungemischten Kanäle reduziert ist, und der Amplitude der Komponente des Richtungsvektors auf dem Mischkanal, für das erste Signal; und

- Bestimmen (140) der Ankunftsrichtung des ersten Signals aus den interferometrischen Phasen oder aus dem geschätzten Richtungsvektor für das erste Signal, das als das Signal von Interesse betrachtet wird.

2. Verfahren nach Anspruch 1, wobei die Schritte zum Schätzen des ersten und zweiten Signals auf den ungemischten Kanälen auf den folgenden Gleichungen basieren:

$$\begin{cases} CX_l = s_l U + W_{1l} \\ CZ_l = s_l' \overline{U} + W_{3l} \end{cases} , l \in [1, L]$$

wobei: $CX_l$ die ersten Messvektoren sind; $CZ_l$ die zweiten Messvektoren sind; $s_l$ und $s_l'$ die komplexen Amplituden des ersten Signals bzw. des zweiten Signals sind; $U$ und $\overline{U}$ die Richtungsvektoren sind, die auf die ungemischten Kanäle reduziert sind; und $W_{1l}$, $W_{3l}$ Gaußsche, zentrierte, in l und untereinander unabhängige Geräusche sind.

3. Verfahren nach Anspruch 2, wobei, da die auf die ungemischten Kanäle reduzierten Richtungsvektoren $U$ et $\overline{U}$ nicht normiert sind, ein normierter Vektor A und eine positive reelle Zahl $\mu$ eingeführt werden, sodass $U = \mu A$ und der Schritt (134) des Schätzens aus Folgendem besteht:

- Diagonalisieren der Matrix $Cov_1$, die wie folgt definiert ist:

$$Cov_1 = \sum_{l=1}^{L}(CX_l)(CX_l^*)$$

- Bestimmen des Eigenvektors, der mit dem größten Eigenwert der Matrix $Cov_1$ als Schätzung $\hat{A}$ des Vektors A assoziiert ist;
- Bestimmen der komplexen Amplituden $s_l$ des ersten Signals, gefiltert auf den M - 1 ungemischten Kanälen, bis auf einen positiven reellen Faktor $\mu$, durch Berechnen der Größen $\xi_l$ anhand des hermiteschen Skalarprodukts der Vektoren $\hat{A}$ und $CX_l$ gemäß dem folgenden Verhältnis:

$$\xi_l = \hat{A}^* CX_l (= \widehat{\mu s_l})$$

- Diagonalisieren der Matrix $Cov_2$, die wie folgt definiert ist:

$$Cov_2 = \sum_{l=1}^{L}(CZ_l)(CZ_l^*)$$

- Bestimmen des Eigenvektors, der mit dem größten Eigenwert der Matrix $Cov_2$ als Schätzung $\overline{\hat{A}}$ des Vektors $\overline{A}$ assoziiert ist;
- Bestimmen der komplexen Amplituden $s_l'$ des zweiten Signals, gefiltert auf den M - 1 ungemischten Kanälen, bis auf einen positiven reellen Faktor $\mu_2$, durch Berechnen der Größen $\eta_l$ anhand des hermiteschen Skalarprodukts der Vektoren $\overline{\hat{A}}$ und $CZ_l$ gemäß dem folgenden Verhältnis:

$$\eta_l = \overline{\hat{A}}^* CZ_l (= \widehat{\mu s_l'}).$$

4. Verfahren nach Anspruch 3, wobei das Berechnen (136) der interferometrischen Phase $\varphi$ des ersten Signals auf dem Mischkanal darin besteht, den komplexen Skalar $z = \dfrac{v e^{i\varphi}}{\mu}$ zu schätzen, wobei $v$ der Modul der Komponente des Richtungsvektors auf dem Mischkanal des ersten Signals ist, durch Suchen der Größe $\hat{z}$, die den quadratischen Fehler $|y_l - z\xi_l - \overline{z}\eta_l|^2$ minimiert, wobei $y_l$ die skalaren Messungen auf dem Mischkanal sind.

5. Verfahren nach Anspruch 4, wobei nach dem Schritt (136) des Schätzens der interferometrischen Phasen des ersten Signals, das Verfahren einen Schritt (138) umfasst, bestehend aus einem Schätzen des Moduls des Richtungsvektors, der auf die ungemischten Kanäle reduziert ist, und der Amplitude der Komponente des Richtungsvektors auf dem Mischkanal, für das erste Signal:

$$\hat{\mu} = \frac{1}{\sqrt{1+|\hat{z}^2|}}, \ \hat{v} = \frac{|\hat{z}|}{\sqrt{1+|\hat{z}^2|}}.$$

6. Verfahren nach Anspruch 5, wobei in Schritt (138) der Richtungsvektor des ersten Signals geschätzt wird:

$$\hat{V} = \begin{pmatrix} \hat{\mu}\hat{A} \\ \hat{v}e^{i\hat{\varphi}} \end{pmatrix}.$$

7. Computerprogrammprodukt, umfassend Anweisungen, die, wenn sie von einem Computer (28) ausgeführt werden, geeignet sind, ein Verfahren auszuführen, **dadurch gekennzeichnet, dass**:

   - das Verfahren ein Verfahren gemäß einem der Ansprüche 1 bis 6 ist; und
   - der Computer (28) Teil eines interferometrischen Goniometers ist, wobei das interferometrische Goniometer M Empfangskanäle umfasst, wobei M eine ganze Zahl größer als oder gleich wie vier ist, jeder Empfangskanal umfassend nacheinander eine Antenne (12$_m$), ein analoges Empfangsmodul (14$_m$) und ein digitales Empfangs-modul (20$_m$), wobei das digitale Empfangsmodul mit einer ihm eigenen Abtastfrequenz (fe$_m$) betrieben wird und periodisch ein Zeit-Frequenz-Gitter (G$_m$) ausgibt, jedes Feld des Zeit-Frequenz-Gitters eine komplexe Messung enthält, wobei der Zeit-/Frequenzraum in Bereiche *(D$_{i,k}$) unterteilt ist,* jeder Bereich auf ein Fenster *(F$_{m,i,j}$)* des Abtastbands eines Empfangskanals gefaltet ist, ein Fenster *L* Felder umfasst, eine Trägerfrequenz eines Signals von Interesse auf einem Empfangskanal in der Nähe eines Vielfachen der Hälfte der Abtastfrequenz des Empfangskanals liegt, das obere Seitenbandmuster und das untere Seitenbandmuster des Spektrums des interessierenden Signals sich dann in dem entsprechenden Fenster des Abtastbands des Empfangskanals, dem sogenannten Mischkanal, mischen, wobei die anderen Empfangskanäle als ungemischte Kanäle bezeichnet werden.

8. Interferometrisches Goniometer (10), das Goniometer umfassend M Empfangskanäle, wobei M eine ganze Zahl größer als oder gleich wie vier ist, jeder Empfangskanal umfassend nacheinander eine Antenne (12$_m$), ein analoges Empfangsmodul (14$_m$) und ein digitales Empfangsmodul (20$_m$), wobei das digitale Empfangsmodul mit einer ihm eigenen Abtastfrequenz (fe$_m$) betrieben wird und periodisch ein Zeit-Frequenz-Gitter (G$_m$) ausgibt, jedes Feld des Zeit-Frequenz-Gitters eine komplexe Messung enthält, wobei der Zeit-/Frequenzraum in Bereiche *(D$_{i,k}$) unterteilt ist,* jeder Bereich auf ein Fenster *(F$_{m,i,j}$)* des Abtastbands eines Empfangskanals gefaltet ist, ein Fenster *L* Felder umfasst, **dadurch gekennzeichnet, dass** in dem Fall, dass auf einem Empfangskanal eine Trägerfrequenz des Signals von Interesse in der Nähe eines Vielfachen der halben Abtastfrequenz des Empfangskanals liegt, das obere Seitenbandmuster und das untere Seitenbandmuster des Spektrums des interessierenden Signals sich dann in dem entsprechenden Fenster des Abtastbands des Empfangskanals, dem sogenannten Mischkanal, mischen, wobei die anderen Empfangskanäle als ungemischte Kanäle bezeichnet werden, das interferometrische Goniometer angepasst ist, um die Anweisungen eines Computerprogrammprodukts nach Anspruch 7 auszuführen.

**Claims**

1. A method (100) for detecting an electromagnetic signal of interest and for estimating its direction of arrival, said method being implemented by a interferometric goniometer having a wide reception band and sub-sampled digital reception, the said interferometric goniometer comprising M reception channels, M being an integer greater than or equal to four, each reception channel successively comprising an antenna (12$_m$), an analogue reception module (14$_m$) and a digital reception module (20$_m$), the digital reception module operating at its own sampling frequency (fe$_m$) and periodically delivering a time-frequency grid (G$_m$) supplied by a succession of spectral analyses, each cell of the time/frequency grid containing a complex measurement, **characterised in that**, in the case where, on a reception channel, a carrier frequency of the signal of interest is located in the vicinity of a multiple of half the sampling frequency of the said reception channel, the upper sideband pattern and the lower sideband pattern of the spectrum of the signal of interest mixing after folding in the said reception channel, referred to as the mixing channel, the other reception channels being referred to as the non-mixing channels, the method comprises the steps consisting in:

   - defining (105) time/frequency domains *(D$_{i,k}$)* by subdividing the time/frequency space, each time/frequency domain corresponding to the Cartesian product of a time interval equal to the duration of a few successive spectral analyses, by a frequency interval equal to a few spectral analysis channels, each domain being folded onto a window *(F$_{m,i,j}$)* in the reception channel m, a window comprising L bins;

- detecting (110) the possible presence of a signal of interest by comparing the energy contained in the unmixed windows with a threshold, and sampling (105), in the M time/frequency grids delivered by each of the reception channels, the measurements of the bins of the windows associated with the upper sideband pattern domain as a first signal ($S^+$) and the measurements of the bins of the windows associated with the lower sideband pattern domain as a second signal (S-),

- generating (132) measurement vectors from the measurements taken in such a way that: the measurements of the first signal on the unmixed channels are put in the form of L first measurement vectors *(CX$_l$)*; the measurements of the second signal on the unmixed channels are put in the form of L second measurement vectors *(CZ$_l$)*; and the measurements on the mixed channel correspond to L scalars *(y$_l$)*;

- estimating (134) on the one hand the complex amplitudes, to within one normalisation coefficient, of the first signal and the directional vector reduced to the unmixed and normalised channels of the first signal, solely from the L first measurement vectors *(CX$_l$)*; and secondly the complex amplitudes, to within one normalisation coefficient, of the second signal and the directional vector reduced to the unmixed and normalised channels of the second signal, based solely on the L second measurement vectors *(CZ$_l$)*;

- calculating (136) the interferometric phases of the first signal on the mixing channel from the complex amplitudes estimated from the measurements on the mixing channel;

- calculating (138) the modulus of the directional vector reduced to the unmixed channels, and the amplitude of the component of the directional vector on the mixing channel, for the first signal; and,

- determining (140) the direction of arrival of the first signal from the interferometric phases or from the directional vector estimated for the first signal, considered as the signal of interest.

2. A method according to claim 1, wherein the steps of estimating the first and second signals on the unmixed channels are based on the following equations:

$$\begin{cases} CX_l = s_l U + W_{1l} \\ CZ_l = s'_l \overline{U} + W_{3l} \end{cases}, l \in [1, L]$$

where: CX$_l$ are the first measurement vectors; CZ$_l$ are the second measurement vectors; s$_l$ and s'$_l$ are the complex amplitudes of the first and second signals respectively; U and $\overline{U}$ are the directional vectors reduced to the unmixed channels; and W$_{1l}$ W$_{3l}$ are Gaussian, centred noises that are independent in l and between them.

3. A method according to claim 2, in which, the directional vectors reduced to the unmixed channels, U and $\overline{U}$, not being standardised, a normalised vector A and a positive real μ are introduced, such that $U = \mu A$ and the estimation step (134) consists of:

- diagonalising the matrix Cov$_1$ defined as:

$$\text{Cov}_1 = \sum_{l=1}^{L} (CX_l)(CX_l^*)$$

- determining the eigenvector associated with the largest eigenvalue of the matrix Cov$_1$ as the estimated Â of vector A;

- determine the complex amplitudes s$_l$ of the first signal, filtered on the *M* - 1 unmixed channels, to the nearest positive real factor, μ, by calculating the quantities ξ$_l$ from the Hermitian scalar product of the vectors Â and *CX$_l$* according to the relationship:

$$\xi_l = \hat{A}^* CX_l (= \widehat{\mu s_l})$$

- diagonalising the matrix Cov$_2$ defined as:

$$\text{Cov}_2 = \sum_{l=1}^{L} (CZ_l)(CZ_l^*)$$

- determining the eigenvector associated with the largest eigenvalue of the matrix Cov$_2$ as an estimate $\hat{\overline{A}}$ of the vector $\overline{A}$;

- determining the complex amplitudes s'$_l$ of the second signal, filtered on the *M* - 1 unmixed channels, to within one

positive real factor, $\mu_2$, by calculating the quantities $\eta_l$ from the Hermitian scalar product of the vectors $\bar{\hat{A}}$ and $CZ_l$ according to the relationship:

$$\eta_l = \bar{\hat{A}}^* CZ_l (= \widehat{\mu s'_l}).$$

4.  A method according to claim 3, in which calculating (136) the interferometric phase $\varphi$ of the first signal on the mixing path consists in estimating the complex scalar $z = \dfrac{v e^{i\varphi}}{\mu}$, where v is the modulus of the component of the directional vector on the mixing path of the first signal, by seeking the quantity $\hat{z}$ which minimises the quadratic error $|y_l - z \xi_l - \bar{z} \eta_l|^2$, where $y_l$ are the scalar measurements on the mixing channel.

5.  A method as claimed in claim 4, wherein, after the step (136) of estimating the interferometric phases of the first signal, with the method comprising a step (138) consisting of estimating the modulus of the directional vector reduced to the mixing channels, and the amplitude of the component of the directional vector on the mixing channel, for the first signal:

$$\hat{\mu} = \frac{1}{\sqrt{1+|\hat{z}^2|}}, \quad \hat{v} = \frac{|\hat{z}|}{\sqrt{1+|\hat{z}^2|}}.$$

6.  A method as claimed in claim 5, wherein step (138) comprises estimating the directional vector of the first signal:

$$\hat{V} = \begin{pmatrix} \hat{\mu}\hat{A} \\ \hat{v}e^{i\hat{\varphi}} \end{pmatrix}.$$

7.  Computer program product comprising instructions which, when executed by a computer (28), are suitable for implementing a method, **characterised in that**:

    - said method is a method according to any one of claims 1 to 6; and,
    - the computer (28) forms part of an interferometric goniometer, said interferometric goniometer comprising M reception channels, M being an integer greater than or equal to four, each reception channel successively comprising an antenna ($12_m$), an analogue reception module ($14_m$) and a digital reception module ($20_m$), the digital reception module operating at a sampling frequency ($fe_m$) of its own and periodically delivering a time-frequency grid ($G_m$), each cell of the time/frequency grid containing a complex measurement, the time/frequency space being subdivided into domains $(D_{i,k})$, one domain being folded over a window $(F_{m,i,j})$ of the sampling band of a reception channel, window comprising L compartments, a carrier frequency of a signal of interest being located, on a reception channel, in the vicinity of a multiple of half the sampling frequency of the said reception channel, the upper sideband pattern and the lower sideband pattern of the spectrum of the signal of interest then mixing in the corresponding window of the sampling band of the said reception channel, referred to as the mixing channel, the other reception channels being referred to as unmixed channels.

8.  Interferometric goniometer (10), said goniometer comprising M reception channels, M being an integer greater than or equal to four, each reception channel successively comprising an antenna ($12_m$), an analogue reception module ($14_m$) and a digital reception module ($20_m$), the digital reception module operating at its own sampling frequency ($fe_m$) and periodically delivering a time/frequency grid ($G_m$), each cell of the time/frequency grid containing a complex measurement, the time/frequency space being subdivided into domains $(D_{i,k})$, a domain being folded onto a window $(F_{m,i,j})$ of the sampling band of a reception channel, **characterised in that** a window comprising L compartments, **characterised in that**, in the case where, on a reception channel, a carrier frequency of a signal of interest is located in the vicinity of a multiple of half the sampling frequency of said reception channel the upper sideband pattern and the lower sideband pattern of the spectrum of the signal of interest then mix in the corresponding window of the sampling band of said reception channel, referred to as the mixing channel, the other reception channels being referred to as unmixed channels, the interferometric goniometer is adapted to execute the instructions of a computer program product in accordance with claim 7.

FIG.1

FIG.2

FIG.3

FIG.4

EP 3 971 599 B1

Définition des domaines et des fenêtres

105

B

Détection 110

Situation 1 : présence
de signal d'intérêt

Situation 2: absence de signal
d'intérêt

Elaboration des mesures :
$L$ vecteurs $CX_l$, $L$ vecteurs $CY_l$, $L$ scalaires $z_l$

132

Estimation des $s_l$ et de $A$

134

Estimation de φ

136

Estimation de $\mu, \nu$

138

Estimation de la DOA

140

Arrêt du traitement

120

100

130

## FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3671250 A1
- US 2018083816 A1
- FR 3020157 A1